# EUROPEAN PATENT SPECIFICATION

(11) **EP 4 787 305 B1**
(45) Date of publication and mention of the grant of the patent: **28.10.2026**
(21) Application number: 25154976.2
(22) Date of filing: 30.01.2025
(51) Int. Cl.: G06T 7/246, G06T 7/11

(54) **A METHOD FOR DETERMINING A TRACKED STATE OF AT LEAST ONE OBJECT IN A SEQUENCE OF IMAGES**
VERFAHREN ZUR BESTIMMUNG EINES VERFOLGTEN ZUSTANDS VON MINDESTENS EINEM OBJEKT IN EINER BILDSEQUENZ
PROCÉDÉ DE DÉTERMINATION D'UN ÉTAT SUIVI D'AU MOINS UN OBJET DANS UNE SÉQUENCE D'IMAGES

(43) Date of publication of application: 05.08.2026
(73) Proprietor: Axis AB, 223 69 Lund (SE)
(72) Inventor: Hasselberg, Emanuel, 223 69 LUND (SE); Eriksson, Jonatan, 223 69 LUND (SE); Ärlebäck, Richard, 223 69 LUND (SE)
(74) Representative: AWA Sweden AB

(56) References cited:
- US-A1- 2021 365 707
- US-A1- 2023 252 649
- US-B2- 10 628 961

## Description

### Technical field

The present description relates to object tracking in images. In particular, the present description relates to a method for determining a tracked state of at least one tracked object in a sequence of images, to a system for determining a tracked state of at least one tracked object in a sequence of images, and a non-transitory computer-readable storage medium having stored thereon instructions to cause the system to determine a tracked state of at least one tracked object in a sequence of images.

### Background

Object detection and object tracking in images is used widely to detect, trace, and predict the movement of objects such as humans, cars, and buildings in digital images and videos. Object tracking methods typically involve some form of predictive step that predicts possible locations of the tracked object. The prediction may be based on physical models and can be compared with the observed location of the tracked object to improve the accuracy of the object tracking.

Document US10628961B2 discloses a method for tracking objects in a sequence of images using a trained neural network in combination with object trackers. A first object tracker uses a detection result of the trained neural network to track detected objects in a subsequent image, including by adjusting locations of bounding boxes associated with the detected objects. A second object tracker is applied to a greater number of images of the sequence than the trained neural network, and object tracking is performed based on the results of the first and second object trackers.

There is a lot of room for improvement of object tracking methods and systems in terms of accuracy and reliability of the tracking. For example, there's a chance that a tracked object is lost or not tracked in a physically consistent manner. Thus, it is highly desirable to have a method and a system for reliably and accurately tracking an object in digital images and videos.

### Summary of the invention

With the above in mind, an object of the present invention is to provide a system, which seeks to mitigate, alleviate or eliminate one or more of the above-identified deficiencies in the art and disadvantages singly or in any combination. The invention is defined by the appended claims.

Hence, in a first aspect of the present invention there is provided a method for determining a tracked state of at least one tracked object in a sequence of images, wherein the tracked state comprises at least a tracked position, and wherein the sequence of images forms a consecutive time series of images, each image separated in time from other images, the method comprising:
determining a region of interest (ROI) in a current image of the sequence of images, wherein the ROI comprises pixels of the current image that represent the at least one tracked object depicted in the current image, wherein the determining of the ROI comprises determining an observed current state of the ROI, wherein the observed current state comprises at least an observed current position of the ROI;
aggregating, based on at least one previous image from the sequence of images, motion information data of the current image to obtain an estimated current motion of the ROI;
predicting a predicted current state of the ROI, wherein the predicted current state comprises at least a predicted current position, based on: a previous state of the ROI, wherein the previous state comprises at least a previous position of the ROI; a plurality of object tracking models; and the estimated current motion of the ROI, wherein the previous state of the ROI is determined based on the at least one previous image, wherein predicting the predicted current state of the ROI comprises selecting at least one of the plurality of object tracking models, based on the estimated current motion of the ROI, to be used for predicting the predicted current state; and
associating the predicted current state of the ROI with the observed current state of the ROI in order to determine the tracked state of the at least one tracked object.

The tracked state may contain a plurality of properties relating to the at least one tracked object. In addition to the position of the at least one tracked object, the plurality of properties may comprise, for example, any or all of a speed, a velocity, an acceleration, a size, and an object type of the at least one tracked object. The object type may for example be a vehicle, a human, an animal, a projectile.

It is to be understood that throughout this disclosure, unless otherwise stated, all properties relating to the at least one tracked object are in fact properties of the sequence of images. The ROI of the sequence of images is determined as an image representation of the at least one tracked object. The tracked state and all related properties thus describe properties of the image representation of the at least one tracked object. The sequence of images may comprise a common coordinate system made up of the pixels of the respective image, whereby each pixel is located at a respective pixel coordinate.

In other words, for example the position of the tracked state refers to the relative position of the image representation of the at least one tracked object in each respective one of the sequence of images, for example a pixel coordinate. As a further example, the size of the tracked state refers to the relative size of the image representation of the at least one tracked object in the sequence of images, for example the number of pixels of the image representation. In the same manner, other properties of the tracked state refer to the image representation of the at least one tracked object in the context of the sequence of images.

Thus, the described method for determining the tracked state as described is concerned with the tracking of the image representation of the at least one tracked object in the sequences of images, as in contrast to tracking of the at least one tracked object being imaged. It may be possible to map the properties of the tracked state to corresponding values of the at least one tracked object being imaged such as an actual position or an actual size of the at least one tracked object, however such steps are not described in detail in the current disclosure.

Determining the ROI may comprise any method of image object detection capable of classifying an object within an image and assigning a region of said image as belonging to said object. The method for image object detection may comprise instance segmentation and may for example be performed by an algorithm trained with machine learning. The method for image object detection may be an anchor-based object detection method or an anchor-free object detection method. For example, but not limited to, the method for image object detection may be based on convolutional neural networks (CNNs), based on Transformers, or based on a filter for histogram of oriented gradients (HOG).

A plurality of objects may be detected in the same image and assigned a respective ROI. The ROI may comprise some of, all of, or more than all of the pixels that represent the at least one tracked object in the respective one of the sequence of images. The ROI may have any shape, for example it may be a polygon as or a box defined by the pixel coordinates of its corners.

The position of the ROI may refer to a pixel coordinate at a center of the ROI. However, the position may be assigned to any pixel coordinate belonging to the ROI, preferably in a consistent manner.

The method for determining the tracked state uses an interacting multiple model (IMM) approach in that it employs the plurality of object tracking models and makes a choice about which one(s) of the plurality of object models to use depending on the current motion of the ROI.

The method for determining the tracked state is thus advantageous in that it results in a more accurate determination of the tracked state of the at least one tracked object. Accurate determination of the tracked state is facilitated by accounting for the current motion of the ROI when choosing object tracking model(s). This dynamic choice of object tracking model(s) may result in a more accurate prediction of the predicted current state of the ROI, which in turn improves the accuracy of the tracked state determined by associating the predicted current state with the observed current state. Improved accuracy should here be understood as the tracked state more correctly following the true path of the at least one tracked object.

Because the method involves, each time the current image is changed to a subsequent image, continuously modifying the predicting step based on input regarding the current motion of the ROI, the method is quick to adapt the predicting step if the at least one tracked object changes its movement pattern such that the object tracking models that best describe the current motion of the ROI changes. One such example is when the at least one tracked object transitions from standing still to moving or oppositely from moving to standing still, or when a change in acceleration occurs. In such situations when the at least one tracked object changes its movement pattern, object tracking often fails to follow the at least one tracked object, i.e., the tracked object may be lost. However, the proposed method for determining the tracked state is advantageous in that it is more reliable in the sense of being less likely to lose track of the object during such changes in the movement pattern.

The sequence of images may be recorded by at least one camera. The at least one camera may be standing still or may be moving rotationally and/or translationally. In the case the at least one camera is moving, methods for camera motion compensation may be used. The sequence of images may also be referred to as a video. The sequence of images may also be artificially generated or animated images. Each image in the sequence of images may comprise a plurality of pixels. Preferably, each image of the sequence of images has a resolution that is the same, however the resolution may differ for different images of the sequence of images.

Each image of the sequence of images is separated in time from other images of the sequence of images such that the sequence of images forms a consecutive time series of images. The consecutive time series of images may be referred to as a video.

Aggregating the motion information data to obtain the estimated current motion of the ROI implies that the current motion of the ROI is an estimated motion that is representative of the ROI as a whole. This may for example be an average of the motion information data related to the pixels of the ROI.

The predicted current state of the ROI is to be understood as a state that the ROI is expected to occupy at a time point of the current image based on input for the step of predicting the predicted current state of the ROI.

The previous state of the ROI forms part of said input and refers to a state which the ROI was known to occupy at a previous time point, the previous time point being prior the time point of the current image. The previous time point may be a time point of the at least one previous image, such that the previous state of the ROI is a state at which it has been determined to be in the at least one previous image. The previous state of the ROI may have been determined using the disclosed method for determining the tracked state.

In some embodiments, a plurality of previous states of the ROI may have been determined, each from a different image of the at least one previous image, such that a series of tracked states may be related to the series of images. Embodiments with the plurality of previous states of the ROI may further improve the accuracy and reliability of the method for determining the tracked state. However, only one previous state is required and may be sufficient to achieve the highest possible accuracy and reliability of the method for determining the tracked state.

The prediction of the predicted current state of the ROI is thus done based on the previous state of the ROI, taking into account the estimated current motion of the ROI and at least one of the plurality of object tracking models.

Each object tracking model of the plurality of object tracking models may be a model that account for one or several types of motion. For example, each object tracking model may consider for one or several of a constant position, constant velocity, and constant acceleration. In other words, each object tracking model may be for example a zeroth order, a first order, or a second order equation, and so on. Each object tracking model may also comprise one or several parameters representing noise and/or fluctuations. Each object tracking model may deal differently with noise/fluctuations. For example, one model of the plurality of object tracking models may be more/less accepting of noise/fluctuations in the states of the ROI. This allows for weighing between certainty in the states of the ROI and the time for reacting to changes in the states of the ROI, depending on circumstances. For example, the longer the at least one tracked object has been standing still, the less likely it may be to suddenly start moving, and an object tracking model that demands a higher certainty/less accepting of noise and fluctuation in the states of the ROI may be used. In other words, a situation where for example noise/fluctuations are misinterpreted as the at least one tracked object shifting from standing still to moving may be avoided.

Associating the predicted current state of the ROI with the observed current state of the ROI may for example imply minimizing an association cost function. An association cost of the association cost function may refer to a difference between any of the plurality of properties of the at least one tracked object between the predicted current state and the observed current state. For example, the association cost may comprise a distance between a position of the predicted current state and an observed position of the observed current state, and/or an appearance similarity, known as re-id, between the observed current state and the predicted current state.

The method for determining the tracked state may further comprise obtaining the motion information data. The motion information data may be obtained based on the current image and at least one previous image by motion estimation. The motion information data may comprise motion information data points, wherein each motion information data point corresponds to and contains motion information about at least one corresponding pixel in the current image.

The motion information data points of the motion information data may be arranged in a 2D array. The 2D array of the motion information data may overlap the current image such that each motion information data point of the motion information data represents motion information of a corresponding region of the pixels in the current image.

The motion information data may comprise a number of motion information data points that is the same as a number of pixels in the current image, i.e. each motion information data point may correspond to a pixel in the current image such that the motion information data can be seen as having the same resolution as the current image.

Alternatively, each motion information data point may correspond to a plurality of pixels in the current image, such that the number of motion information data points is lower than the number of pixels in the current image, i.e., the motion information data can be seen as having a lower resolution than the current image. An advantage of the motion information data having fewer motion information data points is that the method of determining the tracked state may be more efficient in terms of computing time and power.

Motion estimation, sometimes referred to as optical flow or pixel motion, implies describing the transformation from the at least one previous image to the current image, by describing the offset of the pixel coordinate of each pixel in the current image compared to the pixel coordinate of each corresponding pixel in the at least one previous image. Corresponding pixels implies pixels with a similar value that is likely depicting/representing the same object or region that is being imaged.

Aggregating the motion information data to obtain the current motion of the ROI may thus imply comparing the motion information of at least some of the motion information data points and obtain the current motion of the ROI based on an estimated common value of said at least some of the motion information data points. The estimated common value may for example be obtained as a mean or a median of values of the at least some of the motion information data points, or as a percentage of the at least some of the motion information data points that has a certain value.

In some embodiments, the motion information of each respective motion information data point may comprise information about whether the value(s) of the at least one corresponding pixel in the current image is indicating either motion or a lack of motion.

In other words, the motion information of each motion information data point may for example be a binary value that indicates either motion or lack of motion. If the motion information indicates motion, it is implied that pixel(s) in the current image that corresponds to the motion information data point has changed value in the current image as compared to the at least one previous image. Another way to see it is that the value of the pixel(s) corresponding the motion information data point in the at least one previous image has shifted to a different pixel in the current image, serving as a representation for that the object depicted by said pixel(s) has moved. Correspondingly, if the motion information indicates lack of motion, it is implied that pixel(s) in the current image that corresponds to the motion information data point is the same in the current image as in the at least one previous image.

An advantage of the motion information indicating either motion or lack of motion is that the method of determining the tracked state may be more efficient in terms of computing time and power, since the motion information data contains less information compared to if the motion information comprised more details.

In other embodiments, the motion information of each respective motion information data point may comprise information that indicates a speed or velocity at which the value(s) of the at least one corresponding pixel in the current image is moving.

The speed or velocity indicated by the motion information is to be understood as a speed or velocity at which the value of the pixel(s) in the current image have shifted from a corresponding pixel coordinate in the at least one previous image compared to a corresponding pixel coordinate in the current image. In other words, speed may be defined as a motion distance, within the common coordinate system, which the value of the pixel(s) corresponding the motion information data point in the at least one previous image has shifted compared the current image divided by a difference in time between the at least one previous image and the current image. In other words, speed is indicated by a number. Velocity is then indicated as the speed and a vector indicating the direction of the shift within the common coordinate system.

An advantage of the motion information indicating speed or velocity is that the motion information data contains more detailed information and thus the accuracy and reliability of the step of predicting the predicted current state may be improved.

The method for determining the tracked state may further comprise extracting, from the motion information data, all the motion information data points that correspond to pixels that fall within the ROI of the current image to form ROI motion information data. The aggregating motion information data of the current image may comprise aggregating only the motion information data points that form the ROI motion information data to obtain the estimation of the current motion of the ROI.

In other words, the ROI motion information data may be formed by overlaying the current image and the 2D array of the motion information data, and subsequently extracting the motion information data points of the 2D array of the motion information data that overlap with the ROI of the current image. Thus, the ROI motion information data contains only the motion information data points that correspond to pixels within the ROI.

Obtaining the estimated current motion of the ROI from the ROI motion information data improves the accuracy of the estimated current motion of the ROI since the estimate is based on only the motion information data points that fall within the ROI.

Selecting at least one of the plurality of object tracking models may comprise computing a model weight for each corresponding object tracking model. The model weight may describe a relative preference, based on the estimated current motion of the ROI, for each object tracking model relative other object tracking model(s) of the plurality of object tracking models.

The model weight may for example be indicative of a probability that a certain object tracking model is going to give a more accurate prediction compared to another object tracking model. Thus, the model weight may for example be a percentage, a ratio, or the like, and the sum of the model weight for each of the object tracking models may sum up to for example 100 percentage, 1 percentage, or the like.

The model weight for each object tracking model may be computed differently for each object tracking model. For example, the weight may be proportional to the amount of pixel motion within the ROI. The portion of the ROI that is covered by pixel motion may be mapped to a probability and used as the weight. The magnitude of motion for each pixel may also be considered in such a mapping of probability. The mapping may be for example linear or sigmoid.

In other words, the computing of the model weight for each object tracking model facilitates premiering different object tracking models under different conditions. Compared to a priori predicting the model weight of the different object tracking models, the disclosed method enables momentaneous adaption of the model weights depending on the estimated current motion of the ROI, resulting in more realistic distribution of model weights between the different object tracking models.

The method for determining the tracked state may further comprise generating a state switching matrix based on the model weights of each of the plurality of object tracking models.

The method for determining the tracked state may further comprise determining a predicted state probability vector comprising values representing probabilities of the ROI to be in respective states.

The predicted state probability vector may be determined by combining a previous state probability vector with the state switching matrix. The predicted state probability vector may comprise a plurality of state probabilities. Each of the plurality of state probabilities may correspond to a model weight according to the earlier description.

In some embodiments, the method for determining the tracked state comprises determining a plurality of tracked states according to any of the steps outlined above for a plurality of tracked objects in the sequence of images, each tracked object being assigned a unique ID.

Such embodiments have the advantage that multiple objects in the sequence of images may be tracked at the same time. By assigning each object and ID, the object can be identified and followed throughout the sequence of images.

In a further aspect there is provided a system for determining a tracked state of at least one tracked object in a sequence of images, wherein the tracked state comprises at least a tracked position, and wherein the sequence of images forms a consecutive time series of images, each image separated in time from other images, comprising processing circuitry configured to:
determine a region of interest, ROI, in a current image of the sequence of images, wherein the ROI comprises pixels of the current image that represent at least one tracked object depicted in the current image, wherein the determination of the ROI comprises a configuration to determine an observed current state of the ROI, wherein the observed current state comprises at least an observed current position of the ROI;
aggregate, based on at least one previous image from the sequence of images, motion information data of the current image to obtain an estimated current motion of the ROI;
predict a predicted current state of the ROI, wherein the predicted current state comprises at least a predicted current position, based on: a previous state of the ROI, wherein the previous state comprises at least a previous position of the ROI; a plurality of object tracking models; and the estimated current motion of the ROI, wherein the previous state of the ROI was determined based on the at least one previous image, and wherein at least one of the plurality of object tracking models is selected, based on the estimated current motion of the ROI, to be used to predict the predicted current state; and
associate the predicted current state of the ROI with the observed current state of the ROI in order to determine the tracked state of the at least one tracked object.

In a further aspect there is provided a non-transitory computer-readable storage medium having stored thereon instructions to cause the system as summarized above to execute the steps according to the method as summarized above.

These further aspects provide effects and advantages that correspond to those summarized above in connection with the method according to the first aspect.

### Brief description of the drawings

The above and other aspects of the present invention will now be described in more detail, with reference to appended figures. The figures should not be considered limiting; instead, they are used for explaining and understanding. Like reference numerals refer to like elements throughout.
Fig. 1a schematically illustrates a system.
Fig. 1b and 1c schematically illustrates an image with at least one tracked object.
Fig. 2 is a flowchart of method steps performed in a system.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

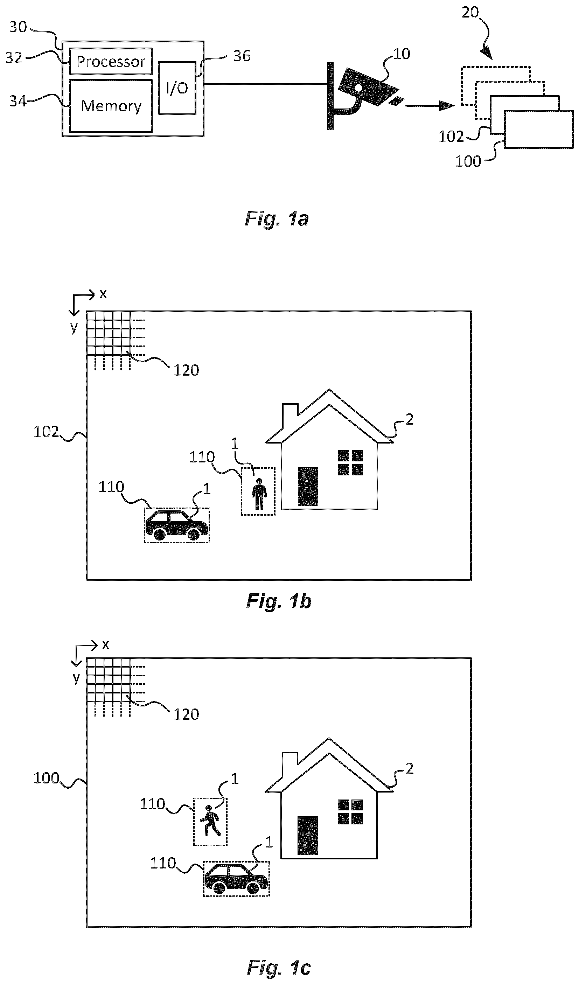

Fig. 1a schematically illustrates a system 30 that comprises processing circuitry configured to determine a tracked state of at least one tracked object in a sequence of images 20, wherein the tracked state comprises at least a tracked position. The sequence of images 20 forms a consecutive time series of images, each image separated in time from other images of the sequence of images 20. As exemplified in Fig. 1a, the system 30 may comprise appropriately configured processing circuitry in the form of a processor 32, memory 34 and an input/output unit 36. The system further comprises a camera 10 configured to obtain the sequence of images 20.

The processor 32 is configured to execute program code stored in the memory 34 in order to carry out functions and operations of the system 30.

The memory 34 may be one or more of a buffer, a flash memory, a hard drive, a removable medium, a volatile memory, a non-volatile memory, a random access memory (RAM), or another suitable device. In a typical arrangement, the memory 34 may include a non-volatile memory for long term data storage and a volatile memory that functions as system memory. The memory 34 may exchange data with the processor 32 over a data bus. Accompanying control lines and an address bus between the memory 34 and the processor 32 may also be present.

Functions and operations of the system 30, including embodiments of a method performed in the context of the system 30 as will be exemplified below, may be embodied in the form of instructions or executable logic routines (e.g., lines of code, software programs, etc.) that are stored on a non-transitory computer readable medium (e.g., the memory 34) of the system 30 and are executed by the processor 32. Furthermore, the functions and operations of the system 30 may be a stand-alone software application or form a part of a software application that carries out additional tasks related to the system 30. The described functions and operations may be considered a method that the corresponding part of the device is configured to carry out.

Also, while the described functions and operations may be implemented in software, such functionality may as well be carried out via dedicated hardware or firmware, or some combination of hardware, firmware and/or software.

The camera 10 may form part of the system 30 or be an external device and be configured to obtain the sequence of images 20 and provide the sequence of images 20, e.g., via the input/output unit 36 to the processing circuitry.

Referring to Fig. 1b and 1c, the system 30 is further configured to determine a region of interest, ROI, 110 in a current image 100 of the sequence of images, wherein the ROI 110 comprises pixels 120 of the current image 100 that represent at least one tracked object 1 depicted in the current image 100, wherein the determination of the ROI 110 comprises a configuration to determine an observed current state of the ROI 110, wherein the observed current state comprises at least an observed current position of the ROI 110.

Each image of the sequence of images may comprise one or more objects 1,2 such as for example a vehicle, a human, a building. Some of objects in the sequence of images may be of interest to track. There may be at least one tracked object 1 which is of interest to track.

The system 30 is further configured to aggregate, based on at least one previous image 102 from the sequence of images, motion information data of the current image to obtain an estimated current motion of the ROI.

It is to be understood that the at least one previous image 102 is obtained at a time point prior to a time point of obtaining the current image 100.

The system 30 is further configured to predict a predicted current state of the ROI 110, wherein the predicted current state comprises at least a predicted current position, based on: a previous state of the ROI 110, wherein the previous state comprises at least a previous position of the ROI 110; a plurality of object tracking models; and the estimated current motion of the ROI 110. Wherein the previous state of the ROI 110 was determined based on the at least one previous image 102. Wherein at least one of the plurality of object tracking models is selected, based on the estimated current motion of the ROI 110, to be used to predict the predicted current state.

The system 30 is further configured to associate the predicted current state of the ROI 110 with the observed current state of the ROI 110 in order to determine the tracked state of the at least one tracked object 1.

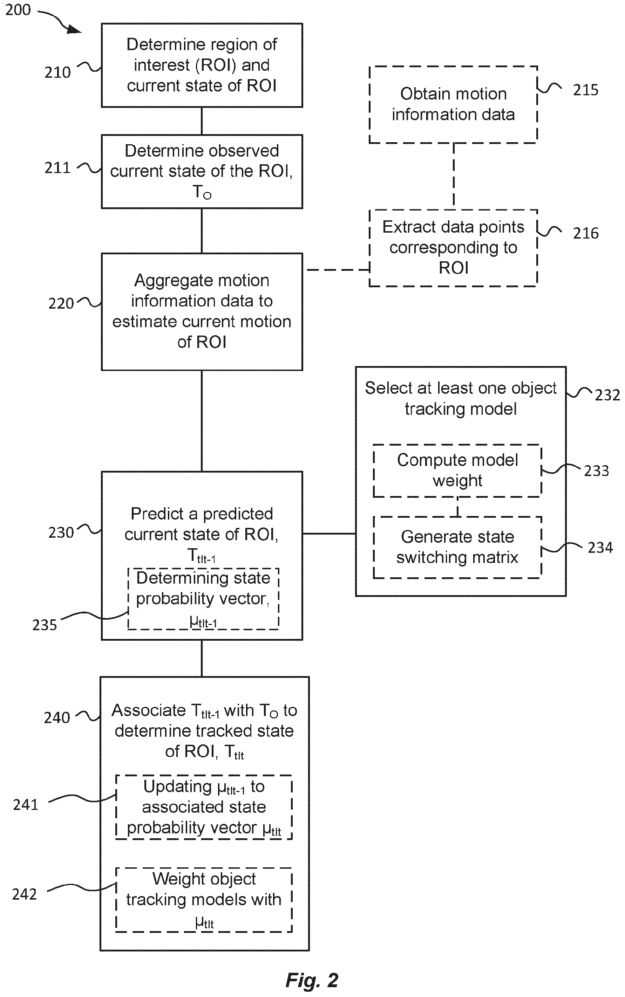

Fig. 1a further illustrates a non-transitory computer-readable storage medium 34 having stored thereon instructions to cause the system 30 to execute steps of a method 200 illustrated in figure 2.

Turning to Fig. 2, with continued reference to Fig. 1a-1c, a method 200 for determining the tracked state of the at least one tracked object 1 in the sequence of images 20 will be exemplified. It is to be understood that the system 30 of Fig. 1a may be configured to perform the method 200 according to any of the steps and variations disclosed below.

The method 200 comprises a determining step 210 whereby the ROI 110 in the current image 100 of the sequence of images is determined. The ROI 110 comprising the pixels of the current image 100 that represent the at least one tracked object 1 depicted in the current image 100. The determining 210 of the ROI 110 comprises determining the observed current state of the ROI 110, wherein the observed current state comprises at least the observed current position of the ROI 110.

In an aggregating step 220, based on at least one previous image 102 from the sequence of images 20, the motion information data of the current image 20 is aggregated to obtain the estimated current motion of the ROI 110.

In a predicting step 230, the predicted current state of the ROI 110 is predicted, wherein the predicted current state comprises at least the predicted current position. The predicting step 230 is based on: the previous state of the ROI 110, wherein the previous state comprises at least the previous position of the ROI 110; the plurality of object tracking models; and the estimated current motion of the ROI 110. The previous state of the ROI 110 is determined based on the at least one previous image 102. The predicting step 230 comprises a selecting step 232. The selecting step 232 comprises selecting at least one of the plurality of object tracking models, based on the estimated current motion of the ROI 110, to be used for predicting the predicted current state.

In an associating step 240, the predicted current state of the ROI 110 is associated with the observed current state of the ROI 110 in order to determine the tracked state of the at least one tracked object 1.

As illustrated in Fig. 2, the method 200 may optionally further comprise an obtaining step 215 whereby the motion information data is obtained. The motion information data may be obtained based on the current image 100 and at least one previous image 102 by motion estimation. The motion information data may comprise motion information data points, wherein each motion information data point corresponds to and contains motion information about at least one corresponding pixel in the current image 100.

The motion information of each respective motion information data point may comprise information about whether the value(s) of the at least one corresponding pixel in the current image 100 is indicating either motion or a lack of motion.

Also or alternatively, the motion information of each respective motion information data point may comprise information that indicates a speed or velocity at which the value(s) of the at least one corresponding pixel in the current image 100 is moving.

Referring to Fig. 2, the method 200 may optionally further comprise an extracting step 216. The extracting step 216 comprises extracting, from the motion information data, all the motion information data points that correspond to pixels that fall within the ROI 110 of the current image to form ROI motion information data. The aggregating 220 motion information data of the current image may comprise aggregating 220 only the motion information data points that form the ROI motion information data to obtain the estimation of the current motion of the ROI 110.

The selecting step 232 may optionally comprise computing 233 a model weight for each corresponding object tracking model. The model weight may describe a relative preference, based on the estimated current motion of the ROI 110, for each object tracking model relative other object tracking model(s) of the plurality of object tracking models.

The selecting step 232 may optionally comprise a generating step 234 comprising generating, prior to the selecting step 232, a state switching matrix based on the model weights of each of the plurality of object tracking models.

The state switching matrix may comprise a 2D matrix. The state switching matrix may be a *NxN* matrix, where *N* is the number object tracking models of the plurality of object tracking models. The state switching matrix may comprise a plurality of elements, *Pᵢⱼ*, wherein each element of the plurality of elements describes a probability for transition from a model i of the plurality of object tracking models in the previous state of the ROI to a model *j* of the plurality of object tracking models. In other words, the elements *Pᵢⱼ* are used for selecting the at least one of the plurality of object tracking models to be used for predicting the predicted current state.

The method 200 may optionally comprise a further determining step 235 comprising, prior to the generating step 233, determining 235 a predicted state probability vector comprising values representing probabilities of the ROI to be in respective states.

The predicted state probability vector may be a *Nx1* matrix, wherein the predicted state probability vector comprises a plurality of state probabilities. Each of the plurality of state probabilities describe a probability for a corresponding one of the plurality of object tracking models to be suitable to describe the at least one tracked object.

The predicted state probability vector may be determined by multiplying the state switching matrix with a previous state probability vector. The previous state probability vector being a vector corresponding to the predicted state probability vector but for the previous state of the ROI 110.

The step of predicting 230 the predicted current state of the ROI 110 may thus base the prediction 230 on the predicted state probability vector.

The step of associating 240 the predicted current state of the ROI 110 with the observed current state of the ROI 110 may further comprise an updating step 241 comprising updating, prior to the associating step 240, the predicted state probability to an associated state probability as a result of the association 240 the predicted current state of the ROI 110 with the observed current state of the ROI 110.

The step of associating 240 the predicted current state of the ROI 110 with the observed current state of the ROI 110 may further comprise a weighting step 242 comprising weighting, prior to the associating step 240, each of the plurality of object tracking models with its corresponding state probability from the associated state probability vector.

The method 200 may optionally comprise determining a plurality of tracked states according to any of the steps outlined above for a plurality of tracked objects 1 in the sequence of images 20, each tracked object being assigned a unique ID.

## Claims

1. A computer-implemented method for determining a tracked state of at least one tracked object in a sequence of images (20), wherein the tracked state comprises at least a tracked position, and wherein the sequence of images (20) forms a consecutive time series of images, each image separated in time from other images, the method comprising:
determining (210) a region of interest, ROI (110), in a current image (100) of the sequence of images, wherein the ROI (110) comprises pixels of the current image (100) that represent at least one tracked object (1) depicted in the current image, wherein the determining (210) of the ROI (110) comprises determining an observed current state of the ROI (110), wherein the observed current state comprises at least an observed current position of the ROI (110);
aggregating (220), based on at least one previous image (102) from the sequence of images (20), motion information data of the current image (20) to obtain an estimated current motion of the ROI (110);
predicting (230) a predicted current state of the ROI (110), wherein the predicted current state comprises at least a predicted current position, based on:
- a previous state of the ROI (110), wherein the previous state comprises at least a previous position of the ROI (110),
- a plurality of object tracking models, and
- the estimated current motion of the ROI (110),
wherein the previous state of the ROI (110) was determined based on the at least one previous image (102), and
wherein predicting (230) the predicted current state of the ROI (110) comprises selecting (232) at least one of the plurality of object tracking models, based on the estimated current motion of the ROI (110), to be used for predicting the predicted current state; and
associating (240) the predicted current state of the ROI (110) with the observed current state of the ROI (110) in order to determine the tracked state of the at least one tracked object (1).

2. The method of claim 1, further comprising obtaining (215) the motion information data, wherein:
the motion information data is obtained (215) based on the current image and at least one previous image by motion estimation, and
the motion information data comprises motion information data points, wherein each motion information data point corresponds to and contains motion information about at least one corresponding pixel in the current image (100).

3. The method according to claim 2, wherein the motion information of each respective motion information data point comprises information about whether the value(s) of the at least one corresponding pixel in the current image is indicating either motion or a lack of motion.

4. The method according to any one of claims 2 or 3, wherein the motion information of each respective motion information data point comprises information that indicates a speed at which the value(s) of the at least one corresponding pixel in the current image (100) is moving.

5. The method according to any one of claims 2 to 4, wherein the motion information of each respective motion information data point comprises information that indicates a velocity at which the value(s) of the at least one corresponding pixel in the current image (100) is moving.

6. The method according to any one of the claims 2-5, further comprising:
extracting (216), from the motion information data, all the motion information data points that correspond to pixels that fall within the ROI of the current image to form ROI motion information data, wherein
the aggregating (220) motion information data of the current image comprises aggregating (220) only the motion information data points that form the ROI motion information data to obtain the estimation of the current motion of the ROI.

7. The method according to any one of the previous claims, wherein the selecting (232) at least one of the plurality of object tracking models comprises computing (233) a model weight for each corresponding object tracking model, the model weight describing a relative preference, based on the estimated current motion of the ROI, for each object tracking model relative other object tracking model(s) of the plurality of object tracking models.

8. The method according to claim 7, further comprising generating (234) a state switching matrix based on the model weights of each of the plurality of object tracking models.

9. The method according to claim 8, further comprising determining (235) a state probability vector comprising values representing probabilities of the ROI to be in respective states.

10. The method according to any one of the previous claims, wherein a plurality of tracked states are determined according to any one of the method of any of the previous claims for a plurality of tracked objects in the sequence of images, each tracked object being assigned a unique ID.

11. A system for determining a tracked state of at least one tracked object in a sequence of images, wherein the tracked state comprises at least a tracked position, and wherein the sequence of images forms a consecutive time series of images, each image separated in time from other images, comprising processing circuitry configured to:
determine a region of interest, ROI, in a current image of the sequence of images, wherein the ROI comprises pixels of the current image that represent at least one tracked object depicted in the current image, wherein the determination of the ROI comprises a configuration to determine an observed current state of the ROI, wherein the observed current state comprises at least an observed current position of the ROI;
aggregate, based on at least one previous image from the sequence of images, motion information data of the current image to obtain an estimated current motion of the ROI;
predict a predicted current state of the ROI, wherein the predicted current state comprises at least a predicted current position, based on:
- a previous state of the ROI, wherein the previous state comprises at least a previous position of the ROI,
- a plurality of object tracking models, and
- the estimated current motion of the ROI,
wherein the previous state of the ROI was determined based on the at least one previous image, and
wherein at least one of the plurality of object tracking models is selected, based on the estimated current motion of the ROI, to be used to predict the predicted current state; and
associate the predicted current state of the ROI with the observed current state of the ROI in order to determine the tracked state of the at least one tracked object.

12. A non-transitory computer-readable storage medium (34) having stored thereon instructions to cause the system (30) according to claim 11 to execute the steps according to any one of claims 1 to 10.

## Patentansprüche

1. Computerimplementiertes Verfahren
zum Bestimmen eines verfolgten Zustands mindestens eines verfolgten Objekts in einer Bildfolge (20), wobei der verfolgte Zustand mindestens eine verfolgte Position umfasst und wobei die Bildfolge (20) eine fortlaufende Zeitreihe von Bildern bildet, wobei jedes Bild von anderen Bildern zeitlich getrennt ist, wobei das Verfahren Folgendes umfasst:
Bestimmen (210) einer interessierenden Region, ROI (110), in einem aktuellen Bild (100) der Bildfolge, wobei die ROI (110) Pixel des aktuellen Bilds (100), die mindestens ein verfolgtes Objekt (1) darstellen, das in dem aktuellen Bild dargestellt ist, umfasst, wobei das Bestimmen (210) der ROI (110) Bestimmen eines beobachteten aktuellen Zustands der ROI (110) umfasst, wobei der beobachtete aktuelle Zustand mindestens eine beobachtete aktuelle Position der ROI (110) umfasst;
Aggregieren (220), basierend auf mindestens einem vorherigen Bild (102) aus der Bildfolge (20), von Bewegungsinformationsdaten des aktuellen Bilds (20), um eine geschätzte aktuelle Bewegung der ROI (110) zu ermitteln;
Vorhersagen (230) eines vorhergesagten aktuellen Zustands der ROI (110), wobei der vorhergesagte aktuelle Zustand mindestens eine vorhergesagte aktuelle Position umfasst, basierend auf Folgendem:
- einem vorherigen Zustand der ROI (110), wobei der vorherige Zustand mindestens eine vorherige Position der ROI (110) umfasst,
- mehreren Objektverfolgungsmodellen und
- der geschätzten aktuellen Bewegung der ROI (110),
wobei der vorherige Zustand der ROI (110) basierend auf dem mindestens einen vorherigen Bild (102) bestimmt wurde und
wobei das Vorhersagen (230) des vorhergesagten aktuellen Zustands der ROI (110) Auswählen (232) mindestens eines der mehreren Objektverfolgungsmodelle basierend auf der geschätzten aktuellen Bewegung der ROI (110) umfasst, um zum Vorhersagen des vorhergesagten aktuellen Zustands verwendet zu werden; und Zuordnen (240) des vorhergesagten aktuellen Zustands der ROI (110) zu dem beobachteten aktuellen Zustand der ROI (110), um den verfolgten Zustand des mindestens einen verfolgten Objekts (1) zu bestimmen.

2. Verfahren nach Anspruch 1, das ferner Ermitteln (215) der Bewegungsinformationsdaten umfasst, wobei:
die Bewegungsinformationsdaten basierend auf dem aktuellen Bild und mindestens einem vorherigen Bild durch Bewegungsschätzung ermittelt werden (215), und
die Bewegungsinformationsdaten Bewegungsinformationsdatenpunkte umfassen, wobei jeder Bewegungsinformationsdatenpunkt Bewegungsinformationen über mindestens ein entsprechendes Pixel in dem aktuellen Bild (100) entspricht und diese enthält.

3. Verfahren nach Anspruch 2, wobei die Bewegungsinformationen jedes jeweiligen Bewegungsinformationsdatenpunkts Informationen darüber umfassen, ob der eine oder die mehreren Werte des mindestens einen entsprechenden Pixels in dem aktuellen Bild entweder Bewegung oder keine Bewegung angeben.

4. Verfahren nach Anspruch 2 oder 3, wobei die Bewegungsinformationen jedes jeweiligen Bewegungsinformationsdatenpunkts Informationen umfassen, die einen Geschwindigkeitsbetrag angeben, mit dem sich der eine oder die mehreren Werte des mindestens einen entsprechenden Pixels in dem aktuellen Bild (100) bewegen.

5. Verfahren nach einem der Ansprüche 2 bis 4, wobei die Bewegungsinformationen jedes jeweiligen Bewegungsinformationsdatenpunkts Informationen umfassen, die eine Geschwindigkeit angeben, mit der sich der eine oder die mehreren Werte des mindestens einen entsprechenden Pixels in dem aktuellen Bild (100) bewegen.

6. Verfahren nach einem der Ansprüche 2-5, das ferner Folgendes umfasst:
Extrahieren (216), aus den Bewegungsinformationsdaten, aller Bewegungsinformationsdatenpunkte, die Pixeln entsprechen, die in die ROI des aktuellen Bilds fallen, um ROI-Bewegungsinformationsdaten zu bilden, wobei
das Aggregieren (220) von Bewegungsinformationsdaten des aktuellen Bilds Aggregieren (220) nur der Bewegungsinformationsdatenpunkte, die die ROI-Bewegungsinformationsdaten bilden, umfasst, um die Schätzung der aktuellen Bewegung der ROI zu ermitteln.

7. Verfahren nach einem der vorhergehenden Ansprüche, wobei das Auswählen (232) mindestens eines der mehreren Objektverfolgungsmodelle Berechnen (233) eines Modellgewichts für jedes entsprechende Objektverfolgungsmodell umfasst, wobei das Modellgewicht eine relative Präferenz, die auf der geschätzten aktuellen Bewegung der ROI basiert, für jedes Objektverfolgungsmodell relativ zu einem oder mehreren anderen Objektverfolgungsmodellen der mehreren Objektverfolgungsmodelle beschreibt.

8. Verfahren nach Anspruch 7, das ferner Erzeugen (234) einer Zustandswechselmatrix basierend auf den Modellgewichten jedes der mehreren Objektverfolgungsmodelle umfasst.

9. Verfahren nach Anspruch 8, das ferner Bestimmen (235) eines Zustandswahrscheinlichkeitsvektors umfasst, der Werte umfasst, die Wahrscheinlichkeiten dafür darstellen, dass sich die ROI in jeweiligen Zuständen befindet.

10. Verfahren nach einem der vorhergehenden Ansprüche, wobei mehrere verfolgte Zustände gemäß einem des Verfahrens nach einem der vorhergehenden Ansprüche für mehrere verfolgte Objekte in der Bildfolge bestimmt werden, wobei jedem verfolgten Objekt eine eindeutige ID zugewiesen wird.

11. System zum Bestimmen eines verfolgten Zustands mindestens eines verfolgten Objekts in einer Bildfolge, wobei der verfolgte Zustand mindestens eine verfolgte Position umfasst und wobei die Bildfolge eine fortlaufende Zeitreihe von Bildern bildet, wobei jedes Bild von anderen Bildern zeitlich getrennt ist, umfassend eine Verarbeitungsschaltungsanordnung, die zu Folgendem ausgebildet ist:
Bestimmen einer interessierenden Region, ROI, in einem aktuellen Bild der Bildfolge, wobei die ROI Pixel des aktuellen Bilds, die mindestens ein verfolgtes Objekt darstellen, das in dem aktuellen Bild abgebildet wird, umfasst, wobei die Bestimmung der ROI eine Konfiguration zum Bestimmen eines beobachteten aktuellen Zustands der ROI umfasst, wobei der beobachtete aktuelle Zustand mindestens eine beobachtete aktuelle Position der ROI umfasst;
Aggregieren, basierend auf mindestens einem vorherigen Bild aus der Bildfolge, von Bewegungsinformationsdaten des aktuellen Bilds, um eine geschätzte aktuelle Bewegung der ROI zu ermitteln;
Vorhersagen eines vorhergesagten aktuellen Zustands der ROI, wobei der vorhergesagte aktuelle Zustand mindestens eine vorhergesagte aktuelle Position umfasst, basierend auf Folgendem:
- einem vorherigen Zustand der ROI, wobei der vorherige Zustand mindestens eine vorherige Position der ROI umfasst,
- mehreren Objektverfolgungsmodellen und
- der geschätzten aktuellen Bewegung der ROI,
wobei der vorherige Zustand der ROI basierend auf dem mindestens einen vorherigen Bild bestimmt wurde und
wobei mindestens eines der mehreren Objektverfolgungsmodelle basierend auf der geschätzten aktuellen Bewegung der ROI ausgewählt wird, um zum Vorhersagen des vorhergesagten aktuellen Zustands verwendet zu werden; und
Zuordnen des vorhergesagten aktuellen Zustands der ROI zu dem beobachteten aktuellen Zustand der ROI, um den verfolgten Zustand des mindestens einen verfolgten Objekts zu bestimmen.

12. Nicht transitorisches computerlesbares Speichermedium (34) mit darauf gespeicherten Anweisungen, um zu bewirken, dass das System (30) nach Anspruch 11 die Schritte nach einem der Ansprüche 1 bis 10 ausführt.

## Revendications

1. Procédé mis en œuvre par ordinateur pour déterminer un état suivi d'au moins un objet suivi dans une séquence d'images (20), l'état suivi comprenant au moins une position suivie, et la séquence d'images (20) formant une série temporelle d'images consécutives, chaque image étant séparée dans le temps d'autres images, le procédé comprenant :
la détermination (210) d'une région d'intérêt, ROI (110), dans une image actuelle (100) de la séquence d'images, la ROI (110) comprenant des pixels de l'image actuelle (100) qui représentent au moins un objet suivi (1) figurant dans l'image actuelle, la détermination (210) de la ROI (110) comprenant la détermination d'un état actuel observé de la ROI (110), l'état actuel observé comprenant au moins une position actuelle observée de la ROI (110) ;
l'agrégation (220), à partir d'au moins une image précédente (102) de la séquence d'images (20), de données d'informations de mouvement de l'image actuelle (20) pour obtenir un mouvement actuel estimé de la ROI (110) ;
la prédiction (230) d'un état actuel prédit de la ROI (110), l'état actuel prédit comprenant au moins une position actuelle prédite, d'après :
- un état précédent de la ROI (110), l'état précédent comprenant au moins une position précédente de la ROI (110),
- une pluralité de modèles de suivi d'objet, et
- le mouvement actuel estimé de la ROI (110),
l'état précédent de la ROI (110) ayant été déterminé d'après l'image ou les images précédentes (102), et
la prédiction (230) de l'état actuel prédit de la ROI (110) comprenant la sélection (232) d'au moins un de la pluralité de modèles de suivi d'objet, sur la base du mouvement actuel estimé de la ROI (110), à utiliser pour prédire l'état actuel prédit ; et
l'association (240) de l'état actuel prédit de la ROI (110) à l'état actuel observé de la ROI (110) afin de déterminer l'état suivi de l'objet ou des objets suivis (1).

2. Procédé selon la revendication 1, comprenant en outre l'obtention (215) des données d'informations de mouvement :
les données d'information de mouvement étant obtenues (215) d'après l'image actuelle et au moins une image précédente par estimation de mouvement, et
les données d'informations de mouvement comprenant des points de données d'informations de mouvement, chaque point de données d'informations de mouvement correspondant à et contenant des informations de mouvement concernant au moins un pixel correspondant dans l'image actuelle (100).

3. Procédé selon la revendication 2, les informations de mouvement de chaque point respectif de données d'informations de mouvement comprenant des informations sur le fait que la ou les valeurs du ou des pixels correspondants dans l'image actuelle indiquent soit un mouvement, soit une absence de mouvement.

4. Procédé selon l'une quelconque des revendications 2 ou 3, les informations de mouvement de chaque point respectif de données d'informations de mouvement comprenant des informations qui indiquent une rapidité avec laquelle la ou les valeurs du ou des pixels correspondants dans l'image actuelle (100) se déplacent.

5. Procédé selon l'une quelconque des revendications 2 à 4, les informations de mouvement de chaque point respectif de données d'informations de mouvement comprenant des informations qui indiquent une vitesse à laquelle la ou les valeurs du ou des pixels correspondants dans l'image actuelle (100) se déplacent.

6. Procédé selon l'une quelconque des revendications 2 à 5, comprenant en outre :
l'extraction (216), à partir des données d'informations de mouvement, de tous les points de données d'informations de mouvement qui correspondent à des pixels qui se trouvent dans la ROI de l'image actuelle pour former des données d'informations de mouvement de ROI,
l'agrégation (220) de données d'informations de mouvement de l'image actuelle comprenant l'agrégation (220) des seuls points de données d'informations de mouvement qui forment les données d'informations de mouvement de ROI pour obtenir l'estimation du mouvement actuel de la ROI.

7. Procédé selon l'une quelconque des revendications précédentes, la sélection (232) d'au moins l'un de la pluralité de modèles de suivi d'objet comprenant le calcul (233) d'un poids de modèle pour chaque modèle de suivi d'objet correspondant, le poids de modèle décrivant une préférence relative, sur la base du mouvement actuel estimé de la ROI, pour chaque modèle de suivi d'objet par rapport à un autre ou à d'autres modèles de suivi d'objet de la pluralité de modèles de suivi d'objet.

8. Procédé selon la revendication 7, comprenant en outre la génération (234) d'une matrice de commutation d'état sur la base des poids de modèle de chacun de la pluralité de modèles de suivi d'objet.

9. Procédé selon la revendication 8, comprenant en outre la détermination (235) d'un vecteur de probabilité d'état comprenant des valeurs représentant des probabilités que la ROI soit dans des états respectifs.

10. Procédé selon l'une quelconque des revendications précédentes, une pluralité d'états suivis étant déterminée conformément à l'un quelconque des procédés selon l'une quelconque des revendications précédentes pour une pluralité d'objets suivis dans la séquence d'images, chaque objet suivi se voyant affecter un ID unique.

11. Système de détermination d'un état suivi d'au moins un objet suivi dans une séquence d'images, l'état suivi comprenant au moins une position suivie, et la séquence d'images formant une série temporelle consécutive d'images, chaque image étant séparée dans le temps d'autres images, comprenant un circuit de traitement configuré pour :
déterminer une région d'intérêt, ROI, dans une image actuelle de la séquence d'images, la ROI comprenant des pixels de l'image actuelle qui représentent au moins un objet suivi figurant dans l'image actuelle, la détermination de la ROI comprenant une configuration pour déterminer un état actuel observé de la ROI, l'état actuel observé comprenant au moins une position actuelle observée de la ROI ;
agréger, sur la base d'au moins une image précédente de la séquence d'images, des données d'information de mouvement de l'image actuelle pour obtenir un mouvement actuel estimé de la ROI ;
prédire un état actuel prédit de la ROI, l'état actuel prédit comprenant au moins une position actuelle prédite,
d'après :
- un état précédent de la ROI, l'état précédent comprenant au moins une position précédente de la ROI,
- une pluralité de modèles de suivi d'objet, et
- le mouvement actuel estimé de la ROI,
l'état précédent de la ROI ayant été déterminé d'après l'image ou les images précédentes, et
au moins l'un de la pluralité de modèles de suivi d'objet étant sélectionné, sur la base du mouvement actuel estimé de la ROI, afin d'être utilisé pour prédire l'état actuel prédit ; et
associer l'état actuel prédit de la ROI à l'état actuel observé de la ROI afin de déterminer l'état suivi de l'objet ou des objets suivis.

12. Support (34) de stockage non transitoire lisible par ordinateur, sur lequel sont stockées des instructions pour amener le système (30) selon la revendication 11 à exécuter les étapes selon l'une quelconque des revendications 1 à 10.
